# EUROPÄISCHE PATENTSCHRIFT

(11) **EP 3 642 513 B1**
(45) Veröffentlichungstag und Bekanntmachung des Hinweises auf die Patenterteilung: **31.03.2021**
(21) Anmeldenummer: 18728022.7
(22) Anmeldetag: 17.05.2018
(51) Int. Cl.: F16J 9/06, F16J 9/14

(54) **ÖLABSTREIFKOLBENRING**
OIL CONTROL RING
SEGMENT DE PISTON RACLEUR D'HUILE

(30) Priorität: 19.06.2017 DE 102017113354
(43) Veröffentlichungstag der Anmeldung: 29.04.2020
(73) Patentinhaber: Federal-Mogul Burscheid GmbH, 51399 Burscheid (DE)
(72) Erfinder: SCHMIDT, Peter, 51399 Burscheid (DE); BALKE, Sabine, 51399 Burscheid (DE)
(74) Vertreter: Döpp, Ludger
(86) Internationale Anmeldenummer: PCT/DE2018/100471
(87) Internationale Veröffentlichungsnummer: WO 2018/233753

(56) Entgegenhaltungen:
- EP-A1- 2 562 448
- CN-A- 101 403 437
- DE-A1-102007 059 205
- US-A- 1 574 634

## Beschreibung

Die Erfindung betrifft einen Ölabstreifkolbenring.

Die DE 10 2007 059 205 B4 offenbart einen Ölabstreifring, beinhaltend einen, mit einer Stoßöffnung versehenen Grundkörper, der an seiner inneren Umfangsfläche mit einem Federelement zusammenwirkt und der in radialer Richtung verlaufende Ölablaufkanäle aufweist, wobei ausgehend von der jeweiligen Stirnkante der Stoßöffnung im Bereich der äußeren Umfangsfläche des Grundkörpers in Umfangsrichtung verlaufende Schlitze vorgebbarer Länge eingebracht sind, die zur Halterung und/oder Führung der Endbereiche eines die Stoßöffnung übergreifenden Dichtelements vorgesehen sind.

Derzeit werden Ölabstreifkolbenringe eingesetzt, die einen geradlinig verlaufenden Stoß aufweisen. Der Ölabstreifkolbenring kann über seine Laufflächenstege das Öl sehr gut abstreifen, hinterlässt jedoch im Bereich des Stoßes eine größere Menge Öl, die auf dem Zylinder verbleibt. Das Öl kann nicht gänzlich von den oberhalb des Ölabstreifkolbenrings vorgesehenen Kompressionsringen verteilt bzw. abgegriffen werden und verbleibt so auf dem Zylinder oder wird sogar auf den Kolben geschleudert. Dies kann dazu führen, dass das Restöl in den Verbrennungsraum transportiert wird und
- den Ölverbrauch erhöhen kann
- die Emissionen (Partikel) erhöhen kann
- bei Gasmotoren zu unkontrollierter Verbrennung oder Klopfen führen kann.

CN101403437 (vgl. z.B. Fig. 29) offenbart ein Ölabstreifkolbenring gemäß dem Oberbegriff des Anspruchs 1.

Der Erfindung liegt die Aufgabe zugrunde, einen Ölabstreifkolbenring bereitzustellen, der ein alternatives Design hinsichtlich des Stoßbereiches aufweist, um den aufgezeigten Problemen Rechnung zu tragen, dergestalt, dass ohne zusätzliche Dichtelemente im Stoßberiech dennoch ein öldichter Stoß realisiert werden kann.

Diese Aufgabe wird gelöst durch einen Ölabstreifkolbenring, beinhaltend einen, durch mindestens zwei Laufflächenstege gebildeten Laufflächenbereich, eine innere Umfangsfläche sowie zwischen dem Laufflächenbereich und der inneren Umfangfläche sich erstreckenden oberen und unteren Flankenflächen, des Weiteren beinhaltend einen Stoß sowie zwischen den Laufflächenstegen sich radial von außen nach innen erstreckenden Öldurchtrittsöffnungen, ggf. in Wirkverbindung mit einem Federelement, wobei der Stoß durch mindestens zwei beabstandete, nicht unmittelbar miteinander in Verbindung stehende Schlitzbereiche vorgebbarer Form und Abmessung gebildet ist, dergestalt, dass ein jeder durch einen Schlitz gebildete Schlitzbereich sich, von der zugehörigen Flankenfläche ausgehend, zumindest bis in eine, zwischen mindestens zwei Laufflächenstegen vorgesehene Öldurchtrittsöffnung erstreckt.

Vorteilhafte Weiterbildungen des Erfindungsgegenstandes sind den Unteransprüchen zu entnehmen.

Die jeweiligen Schlitzbereiche werden durch in der Regel gradlinig verlaufende Schlitze vorgebbarer axialer Höhe und Breite gebildet.

Die Schlitzbereiche können bedarfsweise parallel zueinander verlaufen.

Bei der Gestehung des Designs des erfindungsgemäßen Ölabstreifkolbenrings kann es sinnvoll sein, dass die Schlitzbereiche in einem Winkel von 90°, ausgehend von der jeweiligen Flankenfläche, in Richtung der zugehörigen Öldurchtrittsöffnung verlaufen.

Alternativ besteht auch die Möglichkeit, dass die Schlitzbereiche unter einem Winkel < 90°, insbesondere 45°, ausgehend von der jeweiligen Flankenfläche in Richtung der zugehörigen Öldurchtrittsöffnung verlaufen.

Eine weitere Ausgestaltungsform sieht vor, dass die Schlitzbereiche unter unterschiedlichen Winkeln, ausgehend von der jeweiligen Flankenfläche, in Richtung der zugehörigen Öldurchtrittsöffnung verlaufen.

Einem weiteren Gedanken der Erfindung gemäß besteht der Grundkörper des erfindungsgemäßen Ölabstreifkolbenrings aus Gusseisen oder Stahl.

Die axiale Länge des jeweiligen Schlitzbereichs kann auf etwa 50% der axialen Bauhöhe des Grundkörpers begrenzt sein.

Mit dem Erfindungsgegenstand wird ein Ölabstreifkolbenring gebildet, der mit einer Überlappung im Bereich des Stoßes ausgestattet ist und zur Erzielung eines ähnlichen Stoßes den aufgezeigten Problemen entgegenwirkt.

Vorteile des Erfindungsgegenstandes:
- Reduzierung des Ölverbrauchs
- Reduzierung der Emissionen (Partikel)
- Reduzierung unkontrollierter oder klopfender Verbrennungen
- einfache Einführung in die Produktion.

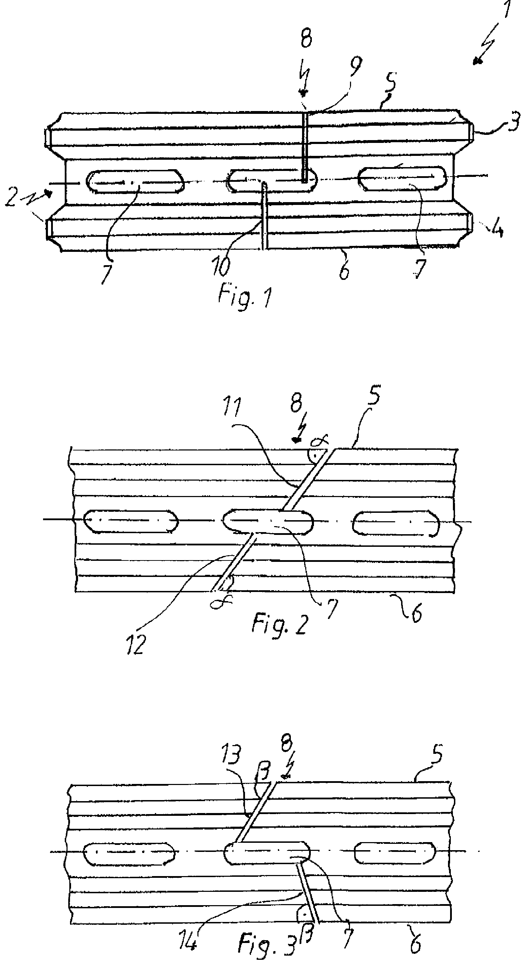

Der Erfindungsgegenstand ist anhand eines Ausführungsbeispiels in der Zeichnung dargestellt und wird wie folgt beschrieben. Es zeigen
- Fig. 1 - 3: unterschiedliche Gestaltungsformen öldichter Stoßbereiche an einem Ölabstreifkolbenring.

Fig. 1 zeigt einen Ölabstreifkolbenring 1, beinhaltend einen Laufflächenbereich 2 in diesem Beispiel gebildet durch zwei Laufflächenstege 3, 4. Erkennbar ist eine obere Flankenfläche 5 sowie eine untere Flankenfläche 6 sowie axial zwischen den Laufflächenstegen 3, 4 sich erstreckende Öldurchtrittsöffnungen 7. Ferner erkennbar ist ein Stoß 8.

Gemäß Fig. 1 wird der Stoß 8 gebildet durch einen, aus zwei Schlitzen 9, 10 gebildeten Schlitzbereich, wobei die Schlitze 9, 10 in diesem Beispiel, ausgehend von er jeweiligen Flankenfläche 5, 6, sich, parallel zueinander verlaufend, axial in Richtung einer einzelnen Öldurchtrittsöffnung 7 erstrecken. Zwischen den Laufflächenstegen 3, 4 wird somit durch die, den Schlitzbereich bildenden Schlitze 9, 10 ein Überlappungsbereich generiert, durch welchen ein öldichter Stoß gebildet wird.

Die Fig. 2 und 3 zeigen alternative Ausgestaltungsformen des Stoßes 8 gemäß Fig. 1.

Gemäß Fig. 2 sind zwei, ebenfalls parallel zueinander verlaufende Schlitze 11, 12 als Schlitzbereiche gegeben, die jedoch abweichend zu Fig. 1 unter einem vorgebbaren Winkel α < 90° von der jeweiligen Flankenfläche 5, 6 ausgehend, in Richtung der zugehörigen Öldurchtrittsöffnung 7 verlaufen.

Fig. 3 zeigt eine weitere Alternative.

Abweichend zu Fig. 2 verlaufen die den Stoß 8 bildenden Schlitze 13, 14 unter unterschiedlichen Neigungswinkeln β, ausgehend von der jeweiligen Flankenfläche 5, 6, in Richtung der zugehörigen Öldurchtrittsöffnung 7.

## Patentansprüche

1. Ölabstreifkolbenring, beinhaltend einen, durch mindestens zwei Laufflächenstege (3, 4) gebildeten Laufflächenbereich (2), eine innere Umfangsfläche sowie zwischen dem Laufflächenbereich (2) und der inneren Umfangfläche sich erstreckenden oberen und unteren Flankenflächen (5, 6), des Weiteren beinhaltend einen Stoß (8) sowie zwischen den Laufflächenstegen (3, 4) sich radial von außen nach innen erstreckenden Öldurchtrittsöffnungen (7), ggf. in Wirkverbindung mit einem Federelement, wobei der Stoß (8) durch mindestens zwei beabstandete, nicht unmittelbar miteinander in Verbindung stehende Schlitzbereiche (9, 10, 11, 12, 13, 14) vorgebbarer Form und Abmessung gebildet ist, **dadurch gekennzeichnet, dass** ein jeder durch einen Schlitz gebildete Schlitzbereich (9, 10, 11, 12, 13, 14) sich, von der zugehörigen Flankenfläche (5, 6) ausgehend, zumindest bis in eine, zwischen mindestens zwei Laufflächenstegen (3, 4) vorgesehene Öldurchtrittsöffnung (7) erstreckt.

2. Ölabstreifkolbenring nach Anspruch 1, **dadurch gekennzeichnet, dass** die Schlitzbereiche (9, 10, 11, 12) parallel zueinander verlaufen.

3. Ölabstreifkolbenring nach Anspruch 1 oder 2, **dadurch gekennzeichnet, dass** die Schlitzbereiche (9, 10) unter einem Winkel von 90°, ausgehend von der jeweiligen Flankenfläche (5, 6), in Richtung der zugehörigen Öldurchtrittsöffnung (7) verlaufen.

4. Ölabstreifkolbenring nach Anspruch 1 oder 2, **dadurch gekennzeichnet, dass** die Schlitzbereiche (11, 12) unter einem Winkel α < 90°, insbesondere 45°, ausgehend von der jeweiligen Flankenfläche (5, 6) in Richtung der zugehörigen Öldurchtrittsöffnung (7) verlaufen.

5. Ölabstreifkolbenring nach Anspruch 1 oder 2, **dadurch gekennzeichnet, dass** die Schlitzbereiche (13, 14) unter unterschiedlichen Winkeln β, ausgehend von der jeweiligen Flankenfläche (5, 6) in Richtung der zugehörigen Öldurchtrittsöffnung (7) verlaufen.

6. Ölabstreifkolbenring nach einem der Ansprüche 1 - 5, gebildet durch einen aus Gusseisen oder Stahl bestehenden, mit den Laufflächenstegen (3, 4) versehenen Grundkörper.

7. Olabstreifkolbenring nach einem der Ansprüche 1 - 6, **dadurch gekennzeichnet, dass** die axiale Länge der Schlitzbereiche (9 - 14) auf etwa 50% der axialen Bauhöhe des Grundkörpers begrenzt sind.

## Claims

1. An oil scraper piston ring, comprising a bearing surface area (2) formed by at least two bearing surface webs (3, 4), an inner circumferential surface as well as upper and lower flank surfaces (5, 6) that extend between the bearing surface area (2) and the inner circumferential surface, furthermore comprising a joint (8) as well as oil passage openings (7), which extend radially between the bearing surface webs (3, 4) from outside towards inside, if necessary in operative connection with a spring element, wherein the joint (8) is formed by at least two slot areas (9, 10, 11, 12, 13, 14) spaced apart from each other, not being directly connected to each other and having a pre-determinable shape and dimension, **characterized in that** each slot area (9, 10, 11, 12, 13, 14) formed by a slot extends from the associated flank surface (5, 6) at least until into an oil passage opening (7) provided between at least two bearing surface webs (3, 4).

2. An oil scraper piston ring according to claim 1, **characterized in that** the slot areas (9, 10, 11, 12) extend in parallel to each other.

3. An oil scraper piston ring according to claim 1 or 2, **characterized in that** the slot areas (9, 10) extend in an angle of 90° from the respective flank surface (5, 6) in the direction of the associated oil passage opening (7).

4. An oil scraper piston ring according to claim 1 or 2, **characterized in that** the slot areas (11, 12) extend in an angle α < 90°, in particular 45°, from the respective flank surface (5, 6) in the direction of the associated oil passage opening (7).

5. An oil scraper piston ring according to claim 1 or 2, **characterized in that** the slot areas (13, 14) extend in different angles β from the respective flank surface (5, 6) in the direction of the associated oil passage opening (7).

6. An oil scraper piston ring according to one of the claims 1 through 5, formed by a base body made of cast iron or steel and provided with the bearing surface webs (3, 4).

7. An oil scraper piston ring according to one of the claims 1 through 6, **characterized in that** the axial length of the slot areas (9 - 14) is limited to approximately 50% of the axial construction height of the base body.

## Revendications

1. Segment de piston racleur d'huile comprenant une zone de surface de roulement (2) formée par au moins deux entretoises de surface de roulement (3, 4), une surface circonférentielle intérieure ainsi que des surfaces de flanc supérieure et inférieure (5, 6), qui s'étendent entre la zone de surface de roulement (2) et la surface circonférentielle intérieure, comprenant en outre un joint (8) ainsi que des trous de passage d'huile (7), qui s'étendent entre les entretoises de surface de roulement (3, 4) radialement de l'extérieur vers l'intérieur, le cas échéant en liaison active avec un élément ressort, dans lequel le joint (8) est formé par au moins deux zones de fente (9, 10, 11, 12, 13, 14) espacées l'une de l'autre, qui ne sont pas directement reliées l'une à l'autre et qui comprennent une forme et une dimension pré-déterminables, **caractérisé en ce que** chaque zone de fente (9, 10, 11, 12, 13, 14) formée par une fente s'étend à partir de la surface de flanc associée (5, 6) au moins jusque dans un trou de passage d'huile (7) prévu entre au moins deux entretoises de surface de roulement (3, 4).

2. Segment de piston racleur d'huile selon la revendication 1, **caractérisé en ce que** les zones de fente (9, 10, 11, 12) s'étendent parallèlement l'une par rapport à l'autre.

3. Segment de piston racleur d'huile selon la revendication 1 ou la revendication 2, **caractérisé en ce que** les zones de fente (9, 10) s'étendent sous un angle de 90° à partir de la surface de flanc associée respective (5, 6) dans la direction du trou de passage d'huile associé (7).

4. Segment de piston racleur d'huile selon la revendication 1 ou la revendication 2, **caractérisé en ce que** les zones de fente (11, 12) s'étendent sous un angle α < 90°, notamment de 45°, à partir de la surface de flanc associée respective (5, 6) dans la direction du trou de passage d'huile associé (7).

5. Segment de piston racleur d'huile selon la revendication 1 ou la revendication 2, **caractérisé en ce que** les zones de fente (13, 14) s'étendent sous des angles différents β à partir de la surface de flanc associée respective (5, 6) dans la direction du trou de passage d'huile associé (7).

6. Segment de piston racleur d'huile selon l'une des revendications 1 à 5, formé par un corps de base fabriqué en fonte ou en acier et muni des entretoises de surface de roulement (3, 4).

7. Segment de piston racleur d'huile selon l'une des revendications 1 à 6, **caractérisé en ce que** la longueur axiale des zones de fente (9 - 14) est limitée à environ 50% de la hauteur de construction axiale du corps de base.
